# EUROPEAN PATENT SPECIFICATION

(11) **EP 3 785 689 B1**
(45) Date of publication and mention of the grant of the patent: **19.06.2024**
(21) Application number: 19793560.4
(22) Date of filing: 25.03.2019
(51) Int. Cl.: A61H 15/02, A61H 1/00, A61H 15/00, A61H 7/00

(54) **CONTROL DEVICE FOR MASSAGER**
STEUERUNGSVORRICHTUNG FÜR MASSAGEGERÄT
DISPOSITIF DE COMMANDE POUR UN APPAREIL DE MASSAGE

(30) Priority: 26.04.2018 KR 20180048419
(43) Date of publication of application: 03.03.2021
(73) Proprietor: Ceragem Co., Ltd., Cheonan-si, Chungcheongnam-do 31045 (KR)
(72) Inventor: HAN, Sang Cheol, Cheonan-si, Chungcheongnam-do 31179 (KR); LEE, Dong Myoung, Asan-si, Chungcheongnam-do 31416 (KR); KIM, Ki Sung, Cheonan-si, Chungcheongnam-do 31175 (KR); KIM, Sang Hee, Cheonan-si, Chungcheongnam-do 31035 (KR)
(74) Representative: Treeby, Philip David William
(86) International application number: PCT/KR2019/003415
(87) International publication number: WO 2019/208935

(56) References cited:
- JP-A- H06 125 954
- JP-A- H06 125 954
- JP-A- 2000 060 923
- JP-A- 2015 000 258
- JP-B2- 4 938 183
- JP-B2- 5 342 993
- JP-B2- 5 342 993
- KR-A- 20160 083 265

## Description

### [Technical Field]

The present disclosure relates to a massager, and more particularly, to a massager controlling apparatus configured to adjust operation times and massage strength for massage patterns of a spinal massager, a massager, a thermal apparatus, and the like.

### [Background Art]

A general bed-type massager measures a lower back length of a user and operates according to a set pattern of massage, and in this case, a moving speed of a driving body is always uniform. Here, since each of a load applied to the driving body and a length for massage varies according to the weight and lower back length of the user, massage operation times can be different.

To this end, a method of unifying times at which an entire massage is ended by performing additional massage or adjusting a time at a particular movement has been provided.

However, in the above-described operation, since massage patterns are practically changed, different massages are provided to users. Particularly, in the case such as demonstration or the like in which a plurality of massagers are used for an effect of massage for users, since the users cannot be provided with the same massage, a practical comparison is difficult and thus effectiveness is low.

Meanwhile, when the user arbitrarily adjusts a massage time, since only the massage time is changed, an entire pattern of the massage is not performed or a part of the pattern is repeatedly performed, and thus a practical massage effect cannot be provided.

Further, since massage strength is gradationally specified by a mechanical structure of the driving body configured to provide massage according to each product, a design change and a manufacturing process of the driving body become complicated so as to provide the massage at strength not in a specified grade.

JP H06 125954 A, JP 5342993 B2 and JP 2015 000258 A are all acknowledged. Document JP H06 125954 A discloses a massage machine that detects a weight of a user, and according to the weight of the user a pressure of a treatment element on a treatment site, an operation speed of the treatment element, and a number of massages per unit time, adjusts massage strength according to massage time.

The present invention provides a massager controlling apparatus according to claim 1.

### [Disclosure]

### [Technical Problem]

The present disclosure is directed to providing a massager controlling apparatus capable of easily adjusting a massage operation time and massage strength and a method thereof. The method of operation itself in the following disclosure is not part of the invention, but helps to understand the invention.

### [Technical Solution]

According to an aspect of the present disclosure, there is provided a massager controlling apparatus comprising: a setting unit configured to set a massage mode including a massage pattern and a standard operation time required to perform the massage pattern of one cycle according to a user's input; and a control unit configured to control a moving speed of a driving module based on the standard operation time; wherein the control unit includes a body shape calculation unit configured to scan a body of the user to calculate a body shape information including a weight and a spinal length of the user; and a time adjusting unit configured to adjust the moving speed of the driving module so that the massage pattern of one cycle is ended at the standard operation time regardless of the body shape information, increase the standard operation time according to the increase signal of the standard operation time based on the user's input for detailed massage in comparison with the massage pattern according to the standard operation time, decrease the moving speed of the driving module so that perform one cycle of the massage pattern according to the increased standard operating time, and decrease the standard operation time according to the decrease signal of the standard operation time based on the user's input for quick massage in comparison with the massage pattern according to the standard operation time, increase the moving speed of the driving module so that perform one cycle of the massage pattern according to the decreased standard operating time.

In the embodiment, the time adjusting part may adjust the moving speed of the driving module on the basis of the set operation time and the spinal length of the user.

In the embodiment, the setting part may include a strength selection part configured to select strength of the massage mode and a strength increasing/decreasing selection part configured to select increasing/decreasing of the selected massage strength to minutely adjust the massage strength, and the control part may include a strength control part configured to control the driving module so that the driving module may be driven at the selected massage strength and a strength adjusting part configured to increase or decrease the moving speed of the driving module according to the increasing/decreasing selection to adjust the massage strength.

In the embodiment, the strength increasing/decreasing selection part may select the corresponding massage strength in an analog manner.

According to another aspect of the present disclosure, there is provided a massager controlling method comprising: setting a massage mode including a massage pattern and a standard operation time required to perform the massage pattern of one cycle according to a user's input by a setting unit; scanning a body of the user for calculating body shape information including a weight and a spinal length of the user by a body shape calculation unit; and controlling a moving speed of a driving module on the basis of the calculated body shape information and adjusting the standard operation time of the massage pattern by a control unit; wherein the adjusting the moving speed of the driving module so that the massage pattern of one cycle is ended at the standard operation time regardless of the body shape information, increasing the standard operation time according to the increase signal of the standard operation time based on the user's input for detailed massage in comparison with the massage pattern according to the standard operation time, decreasing the moving speed of the driving module so that perform one cycle of the massage pattern according to the increased standard operating time, and decreasing the standard operation time according to the decrease signal of the standard operation time based on the user's input for quick massage in comparison with the massage pattern according to the standard operation time, increasing the moving speed of the driving module so that perform one cycle of the massage pattern according to the decreased standard operating time.

In the embodiment, the adjusting may include adjusting a transferring motor configured to horizontally transfer the driving module to adjust the moving speed of the driving module.

In the embodiment, the adjusting may include adjusting the moving speed of the driving module on the basis of the set operation time and the spinal length of the user.

### [Advantageous Effects]

In a massager controlling apparatus according to an embodiment of the present disclosure and a method thereof, since an accurate massage time can be controlled regardless of a body shape of user by controlling a speed of a driving module according to the body shape of the user, reliability of a massage effect can be ensured without deviation for each user.

Further, in the present disclosure, since a massage speed can be adjusted and the same massage effect can be provided to the user according to a time desired by the user by performing the same massage pattern according to the time selected by the user, user convenience functions can be improved.

In addition, in the present disclosure, since massage strength can be continuously variable by gradationally implementing the massage strength by the driving module and adjusting the speed of the driving module to implement medium massage strength, the user can easily select the desired massage strength according to the body shape or the health condition.

### [Description of Drawings]

FIG. 1 is a perspective view illustrating a massager according to an embodiment of the present disclosure;
FIG 2 is a block diagram schematically illustrating the massager in FIG 1;
FIG 3 is a block diagram illustrating a massager controlling apparatus according to the embodiment of the present disclosure;
FIG 4 is a view for describing moving speeds of a driving module when users have the same height and different weights;
FIG 5 is a view for describing moving speeds of the driving module when users have the same weight and different heights;
FIG 6 is a view illustrating an example of a setting part in FIG 3;
FIG 7 is a timing diagram illustrating a massage pattern according to adjustment of a massage operation time;
FIG 8 is a block diagram illustrating another example of the massager controlling apparatus according to the embodiment of the present disclosure;
FIG 9 is a view illustrating an example of a setting part in FIG 8;
FIG 10 is a flow chart illustrating a massager controlling method according to the embodiment of the present disclosure; and
FIG 11 is a flow chart illustrating another example of the massager controlling method according to the embodiment of the present disclosure. Exemplary embodiments

Hereinafter, exemplary embodiments of the present disclosure will be described in detail with reference to the accompanying drawings which may allow one of ordinary skill in the art to easily perform the present disclosure. The present disclosure may be implemented in various forms and is not limited to the following embodiments. Components not related to the description are omitted in the drawings to clearly describe the present disclosure, and the same reference symbols are used for the same or similar components in the description.

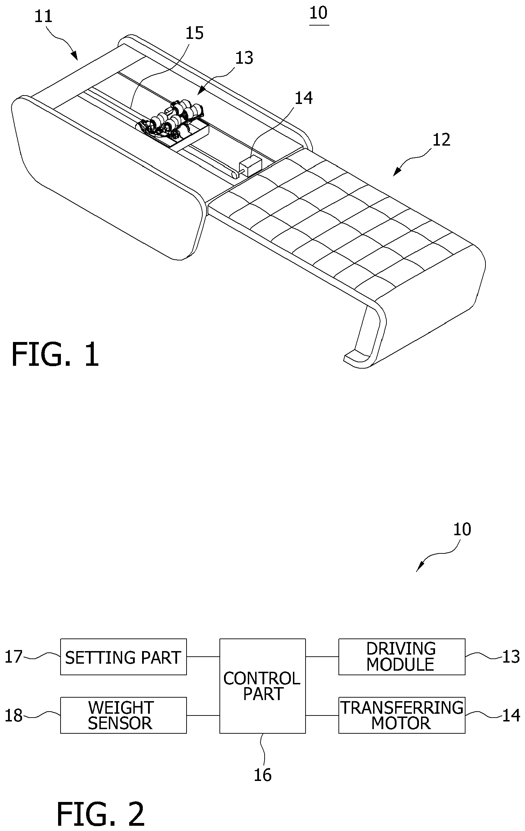

Hereinafter, a massager controlling apparatus according to one embodiment of the present disclosure will be described in more detail with reference to the drawings. FIG 1 is a perspective view illustrating a massager according to an embodiment of the present disclosure, and FIG 2 is a block diagram schematically illustrating the massager in FIG 1.

Referring to FIGS. 1 and 2, a massager 10 to which a massager controlling apparatus 100 according to the embodiment of the present disclosure is applied includes an upper body 11, a lower body 12, a driving module 13, a transferring motor 14, and a transferring part 15.

Here, the massager 10 may include a spinal massager, a massager, or a thermal apparatus, may be an apparatus configured to move on body parts of a user using the transferring motor 14 to repeatedly vibrate or tap the body parts, and has no limitation on a shape thereof.

Further, as shown in FIG 1, the massager 10 includes a bed type in which a user lies to receive massage or a chair type in which a user sits to receive massage and has no limitation on the shape thereof.

The upper body 11 and the lower body 12 may be disposed parallel with each other. The upper body 11 may be provided with a vacant space in a portion thereof and may be provided with the driving module 13, the transferring motor 14, and the transferring part 15 configured to perform massage. The lower body 12 may slide to one side from the upper body.

The driving module 13 may perform at least one of the massage and thermal treatment for each body part of the user. Here, the driving module 13 may be a ceramic module for the thermal treatment. The driving module 13 may move in one direction in the upper body 11 by the transferring motor 14 and the transferring part 15. Further, in the driving module 13, a height of a portion which comes into contact with the body according to massage strength may be adjusted.

As shown in FIG 2, the massager 10 may further include a control part 16, a setting part 17, and a weight sensor 18.

The control part 16 may control setting and performance of a massage mode. In the setting part 17, a massage mode which will be performed may be set by the user. The weight sensor 18 may be provided in the driving module 13 to sense a body pressure of the user.

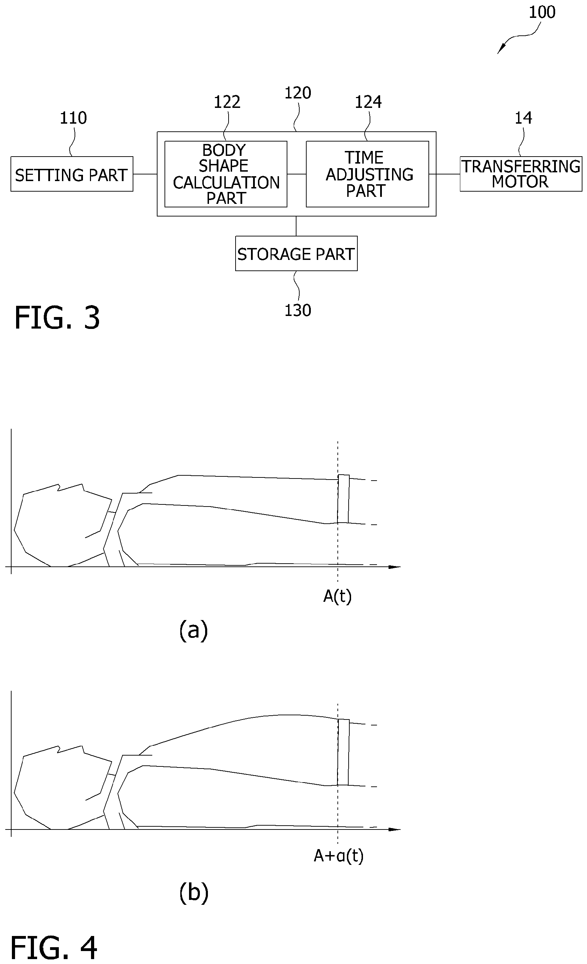

The controlling apparatus 100 configured to control the above-described massager 10 will be described in more detail. FIG 3 is a block diagram illustrating the massager controlling apparatus according to the embodiment of the present disclosure.

Referring to FIG 3, the massager controlling apparatus 100 includes a setting part 110, a control part 120, and a storage part 130. Here, the setting part 110 and the control part 120 may be implemented as parts of the control part 16 and the setting part 17 in FIG 2.

The setting part 110 may set a massage mode of the massager 10. In the setting part 110, the massage mode may set by the user. Here, the massage mode may include a massage pattern, the massage strength, and a massage operation time.

The control part 120 may control a moving speed of the driving module 13 configured to perform the massage to adjust at least one of an operation time and massage strength of a corresponding massage pattern according to a massage mode set by the setting part 110 and a body shape of the user.

Here, the control part 120 may control the transferring motor 14 configured to horizontally transfer the driving module 13 to adjust the moving speed of the driving module 13. The control part 120 may include a body shape calculation part 122 and a time adjusting part 124.

The body shape calculation part 122 may scan the body of the user to calculate at least one of a weight and a spinal length of the user. Here, the spinal length may be a lower back length of a user who receives the massage.

In this case, the body shape calculation part 122 may calculate the weight of the user according to a body pressure sensed by the weight sensor 18 while scanning the user using the driving module 13.

Further, the body shape calculation part 122 may sense currents for each location of the transferring motor 14 to calculate the spinal length of the user according to variation of currents.

The time adjusting part 124 may control the moving speed of the driving module 13 on the basis of body shape information calculated from the body shape calculation part 122 to adjust the operation time of the corresponding massage pattern.

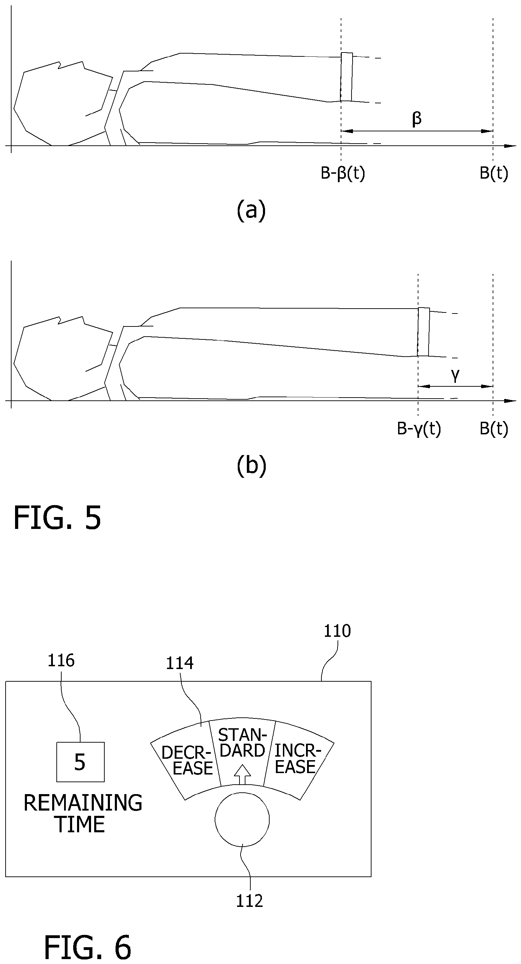

Here, the moving speed of the driving module 13 varies according to the body shape of the user. FIG 4 is a view for describing moving speeds of the driving module when users have the same height and different weights, and FIG 5 is a view for describing moving speeds of the driving module when users have the same weight and different heights.

As shown in FIG 4, when the heights (that is, lower back lengths) are the same but the weights are different, an ending time of the massage varies according to the weight of the user for the same massage pattern. As an example, in the case of FIG 4A in which the weight is small, the ending time of the massage may be A(t), and on the other hand, in the case of FIG 4B in which the weight is large, the ending time of the massage may be A+α(t).

Here, when the heights are the same, moving lengths of the driving module 13 are the same. However, since a load applied to the driving module 13 due to a difference between the weights varies, the moving speed of the driving module 13 varies as much as the difference between the weights for the same massage pattern. Accordingly, in the case of FIG 4B in which the weight is large, a difference α between times for ending the massage occurs in comparison with the case of FIG 4A in which the weight is small.

Further, as shown in FIG 5, when the weights are the same but the heights (that is, the lower back lengths) are different, the ending time of the massage varies according to the height of the user for the same massage pattern. As an example, for the standard ending time B(t) of the corresponding massage pattern, in the case of FIG 5A in which the height is small, the ending time of the massage may decrease by β and thus may be B-β(t), and on the other hand, in the case of FIG 5B in which the height is large, the ending time of the massage may decrease by γ and thus may be B-γ(t).

Here, when the weights are the same, loads applied to the driving module 13 are the same. However, since a length in which the driving module 13 should move due to a difference between the heights varies, the moving length of the driving module 13 varies as much as the difference between the heights for the same massage pattern. Accordingly, the case of FIG 5B in which the height is large may be reduced by a difference (γ-β) between times for ending the massage in comparison with the case of FIG 5A in which the height is small.

As described above, since the moving speed of the driving module 13 varies according to the body shape of the user for the same massage pattern, users may feel different effects. Particularly, in the case such as a demonstration or the like in which a plurality of users experience an effect of a massage, the massage ending times of the users may be different or provided massage patterns may be different. Accordingly, the massage ending times have to be identically adjusted regardless of the user.

To this end, the time adjusting part 124 may adjust so that the set massage pattern set by the setting part 110 may be ended at the same time regardless of the weight and the spinal length of the user.

More specifically, first, the time adjusting part 124 may adjust so that the moving speed of the driving module 13 may vary uniformly according to variation of the load applied to the driving module 13 by the weight of the user. In this case, the time adjusting part 124 may control in real time by sensing the moving speed of the driving module 13 to follow a target moving speed.

Further, the time adjusting part 124 may calculate the moving speed of the driving module 13 on the basis of a predetermined standard operation time and the spinal length of the user for the corresponding massage pattern. Here, the moving speed of the driving module 13 may be calculated in relation to the spinal length of the user and the standard operation time.

Further, the time adjusting part 124 may control the transferring motor 14 to move the driving module 13 at the adjusted moving speed. As an example, the time adjusting part 124 may control the transferring motor 14 by controlling driving currents of the transferring motor 14.

Accordingly, since the massager controlling apparatus 100 may accurately control the massage time regardless of the body shape of user, reliability of the massage effect may be ensured without deviation for each user.

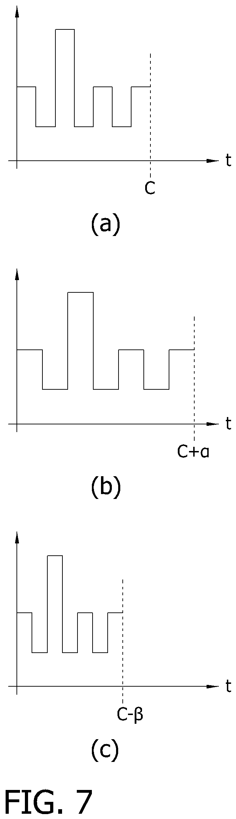

Meanwhile, the massager controlling apparatus 100 may adjust an operation time of the same massage pattern according to selection of the user. FIG 6 is a view illustrating an example of the setting part in FIG 3, and FIG 7 is a timing diagram illustrating the massage pattern according to adjustment of the massage operation time.

To this end, in the setting part 110, the operation time of the corresponding massage pattern may be set by the user. As an example, as shown in FIG 6, the setting part 110 may include an operation time adjusting part 112, an operation time display part 114, and a remaining time display part 116.

The operation time adjusting part 112 may be a dial-type switch or a button-type switch to select the massage operation time displayed on the operation time display part 114.

The operation time display part 114 may display a massage operation time which will be described below. Here, as described above, standard is provided to perform the corresponding massage pattern at the same time regardless of the body shape of the user, and decrease and increase are provided to adjust the operation time according to the selection of the user and perform the corresponding massage pattern for a decreased or increased time in comparison with the standard.

In FIG 6, although the operation time display part 114 is shown and described as three grades including the decrease, the standard, and the increase, the decrease and increase may include a plurality of grades or successive grades in an analog manner.

The remaining time display part 116 may display the remaining time of a corresponding massage mode while the massage is performed according to selection of the operation time. Accordingly, the user may easily adjust the massage operation time.

In this case, the time adjusting part 124 may adjust the moving speed of the driving module 13 so that the corresponding massage pattern may be ended according to the operation time set by the setting part 110. That is, the time adjusting part 124 may calculate the moving speed of the driving module 13 on the basis of the set operation time and the measured spinal length of the user.

Here, the time adjusting part 124 may control the driving currents of the transferring motor 14 to move the driving module 13 at the adjusted moving speed.

As shown in FIG 7, in the case of FIG 7A in which the massage pattern is performed in a standard moving speed, it is assumed that the standard massage operation time is C(t). Here, the massage pattern has a predetermined shape and may be a strength and speed at which the body of the user is tapped or massaged. That is, the massage pattern may be an operation pattern of the driving module 13.

In this case, in the case of FIG 7B in which the massage operation time is increased for detailed massage in comparison with the standard massage operation time, the time adjusting part 124 may control so that the massage pattern linearly increases for a set time (C+α). That is, the time adjusting part 124 may control the moving speed of the driving module 13 to be decreased and the massage pattern to be increased in a time axis in comparison with the case of the standard moving speed of FIG 7A to maintain the same massage pattern even when the massage operation time increases.

Further, in the case of FIG 7C in which the massage operation time is decreased for quick massage in comparison with the standard massage operation time, the time adjusting part 124 may control so that the massage pattern linearly decreases for a set time (C-β). That is, the time adjusting part 124 may control the moving speed of the driving module 13 to be increased and the massage pattern to be decreased in the time axis in comparison with the case of the standard moving speed of FIG 7A to maintain the same massage pattern even when the massage operation time decreases.

Accordingly, since the massager controlling apparatus 100 may adjust a massage speed according to a time desired by the user and provide the same massage effect to the user, user convenience functions may be improved.

Information associated with adjustment of the massage operation time in the control part 120 may be stored in the storage part 130. Here, a predetermined standard operation time for each massage pattern, and the moving speed calculated according to measured body shape information (the spinal length and/or the weight) may be stored in the storage part 130.

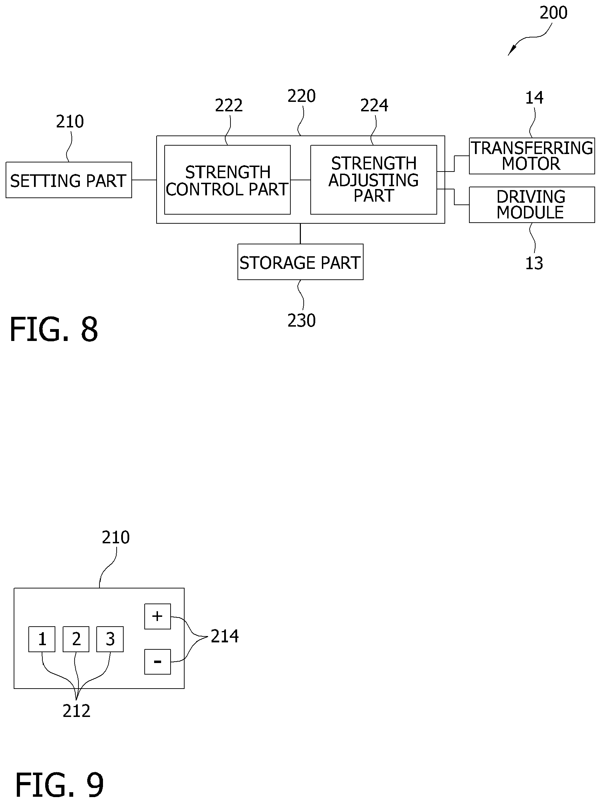

Meanwhile, the massager controlling apparatus according to the embodiment of the present disclosure may provide the massage strength in a successive analog manner. FIG 8 is a block diagram illustrating another example of the massager controlling apparatus according to the embodiment of the present disclosure, and FIG 9 is a view illustrating an example of a setting part in FIG 8.

A massager controlling apparatus 200 includes a setting part 210, a control part 220, and a storage part 230.

The setting part 210 may select or minutely adjust massage strength. As an example, as shown in FIG 9, the setting part 210 may include a strength selection part 212 and a strength increasing/decreasing selection part 214.

The strength selection part 212 may be provided to select the massage strength. Here, the strength selection part 212 may include a plurality of buttons configured to show graded massage strength but is not limited thereto and may be provided to gradationally select the massage strength according to a number input or the like.

The strength increasing/decreasing selection part 214 may be provided to select increasing/decreasing of the massage strength selected by the strength selection part 212 to minutely adjust the selected massage strength. Here, the strength increasing/decreasing selection part 214 may select the massage strength in an analog manner. In this case, the strength increasing/decreasing selection part 214 may include an increase button (+) or a decrease button (-) but is not limited thereto and may be provided to minutely select the massage strength in the analog manner using a dial or the like. Accordingly, the user may easily adjust desired massage strength.

The control part 220 may adjust the massage strength so that the massage strength set by the setting part 210 may be provided in the analog manner. The control part 220 may include a strength control part 222 and a strength adjusting part 224.

The strength control part 222 may control to drive the driving module 13 with the massage strength set by the setting part 210.

The strength adjusting part 224 may increase or decrease the moving speed of the driving module 13 according to increasing/decreasing selection minutely adjusted by the setting part 210 to adjust the massage strength.

Here, when the moving speed of the driving module 13 increases with respect to the same massage strength, the massage strength felt by the user may increase proportionally to the moving speed, which increases, and when the moving speed of the driving module 13 decreases, the massage strength felt by the user may decrease proportionally to the moving speed, which decreases. Variation of the above-described moving speed of the driving module 13 and the massage strength may be experimentally calculated in advance to be stored in the storage part 230.

Accordingly, the strength adjusting part 224 may adjust the moving speed of the driving module 13 driven with the set massage strength to adjust the massage strength. That is, the massage strength may be minutely adjusted between graded massage strength levels provided by the driving module 13.

Information associated with adjustment of the massage strength in the control part 220 may be stored in the storage part 230. Here, a variation amount of the massage strength according to the massage strength level and the moving speed of the driving module 13 may be stored in the storage part 230.

Accordingly, since the massage strength may continuously vary in the massager controlling apparatus 200, the user may easily select desired massage strength according to the body shape or a health condition.

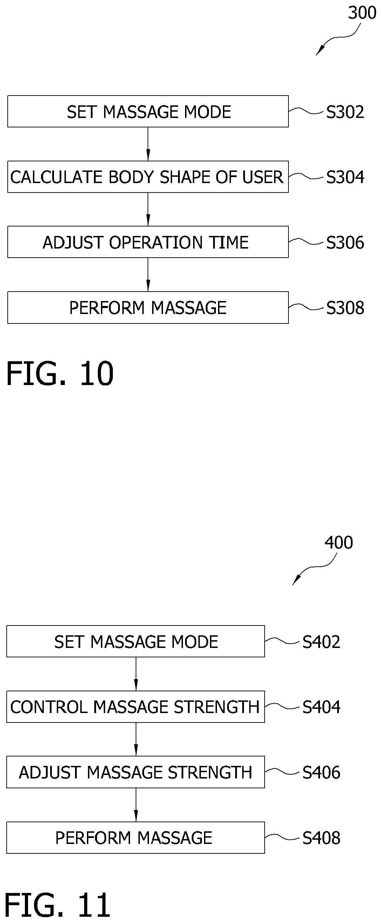

Hereinafter, a massager controlling method of the present disclosure will be described with reference to FIGS. 10 and 11. FIG 10 is a flow chart illustrating the massager controlling method according to the embodiment of the present disclosure. Here, a massager controlling method 300 is to unify massage speeds regardless of the body shape of the user or provide the same massage pattern according to times set by the user.

The massager controlling method 300 includes setting a massage mode (S302), calculating the body shape of the user (S304), adjusting the operation time of the massage (S306), and performing the massage (S308).

In more detail, as shown in FIG 10, first, the massage mode is set by the user in the massager controlling apparatus 100 (S302). In this case, the massage mode may include a massage pattern, a massage strength, and a massage operation time.

Further, the massager controlling apparatus 100 scans the body of the user to calculate the body shape of the user (S304). Here, at least one of the weight and spinal length of the user may be calculated in the body shape of the user.

In this case, the weight of the user may be calculated according to the body pressure sensed by the weight sensor 18 while scanning the user using the driving module 13. Further, the spinal length of the user may be calculated according to variation of currents by sensing the currents for each location of the transferring motor 14.

In addition, the massager controlling apparatus 100 may adjust the operation time of the corresponding massage pattern on the basis of calculated body information (S306). In this case, the operation time of the corresponding massage pattern may be adjusted by adjusting the moving speed of the driving module 13. Here, as described with reference to FIGS. 5 and 6, since the moving speed of the driving module 13 varies according to the body shape of the user for the same massage pattern, the massage ending times have to be identically adjusted regardless of the user.

To this end, the massage pattern set by the user may be adjusted to be ended at the same time regardless of the weight and spinal length of the user. In this case, the transferring motor 14 configured to horizontally transfer the driving module 13 may be controlled to adjust the moving speed of the driving module 13.

In more detail, first, the moving speed of the driving module 13 may be adjusted so that the moving speed of the driving module 13 may vary uniformly according to the variation of the load applied to the driving module 13 by the weight of the user. In this case, the moving speed of the driving module 13 may be controlled in real time by sensing the moving speed of the driving module 13 to follow a target moving speed.

Further, the moving speed of the driving module 13 may be calculated on the basis of the predetermined standard operation time and the spinal length of the user for the corresponding massage pattern. Here, the moving speed of the driving module 13 may be calculated in relation to the spinal length of the user and the standard operation time.

In addition, the massager controlling apparatus 100 performs the massage according to the adjusted operation time (S308). In this case, the massage may be performed with the set massage pattern and the massage strength for the adjusted operation time.

By the above method, since the accurate massage time may be controlled regardless of the body shape of user, the reliability of the massage effect may be ensured without the deviation for each user.

Meanwhile, the massager controlling method 300 may adjust the operation time of the same massage pattern according to the selection of the user.

To this end, in S302, the operation time of the corresponding massage pattern may be set by the user. In this case, one of the standard, the decrease, and the increase may be selected. Here, as described above, the standard is provided to perform the corresponding massage pattern at the same time regardless of the body shape of the user, and the decrease and the increase are provided to adjust the operation time according to the selection of the user and perform the corresponding massage pattern for the decreased or increased time in comparison with the standard.

In the embodiment, although three grades including the decrease, the standard, and the increase are shown and described, the decrease and the increase may include a plurality of grades or successive grades in an analog manner.

Further, in S306, the moving speed of the driving module 13 may be adjusted so that the corresponding massage pattern may be ended according to the operation time set by the user. That is, the moving speed of the driving module 13 may be calculated on the basis of the operation time set by the user and the spinal length of the user measured in S304. Here, the driving currents of the transferring motor 14 may be controlled to move the driving module 13 at the adjusted moving speed.

In this case, as described with reference to FIG 7, when the massage operation time is increased, the massage pattern may be controlled to linearly increase for the time set by the user. That is, it is controlled so that the moving speed of the driving module is decreased and the massage pattern of the driving module 13 is increased in a time axis in comparison with the case of standard moving speed to maintain the same massage pattern even when the massage operation time increases.

Further, when the massage operation time is decreased, the massage pattern may be controlled to linearly decrease for the time set by the user. That is, it is controlled so that the moving speed of the driving module 13 is increased and the massage pattern of the driving module 13 is decreased in the time axis in comparison with the case of standard moving speed to maintain the same massage pattern even when the massage operation time decreases.

In this case, as described above, the speed of the driving module 13 may be adjusted by reflecting a difference between speeds of the driving module 13 due to the load applied to the driving module 13 according to the weight of the user.

Accordingly, since the massage speed may be adjusted and the same massage effect may be provide to the user according to the time desired by the user, the user convenience functions may be improved.

Meanwhile, massager controlling method of the present disclosure may provide the massage strength as successive levels. FIG. 11 is a flow chart illustrating another example of the massager controlling method according to the embodiment of the present disclosure.

A massager controlling method 400 includes setting a massage mode (S402), controlling massage strength (S404), adjusting the massage strength (S406), and performing the massage (S408).

In more detail, as shown in FIG 11, first, the massage mode is set by the user in the massager controlling apparatus 200 (S402). In this case, the massage strength and the massage pattern are set as the massage mode. Here, the massage strength may be set by a plurality of graded buttons type.

Further, the massager controlling apparatus 200 controls to drive the driving module 13 with the massage strength of the massage mode set by the user (S404). As described above, the user may select the increasing/decreasing of the massage strength to minutely adjust the massage strength while performing the massage with the set massage strength.

Further, the massager controlling apparatus 200 increases or decreases the moving speed of the driving module 13 according to the increasing/decreasing selection minutely adjusted by the user to adjust the massage strength of the driving module 13 (S406).

Here, since the moving speed of the driving module 13 increases or decreases for the same massage strength, the massage strength felt by the user may also increase or decrease. In this case, the moving speed of the driving module 13 and the variation amount of the massage strength may be experimentally calculated in advance to be stored.

Accordingly, the massage strength may be minutely adjusted between the graded massage strength levels by adjusting the moving speed of the driving module 13 driven with the set massage strength.

Further, the massager controlling apparatus 200 performs the massage according to the adjusted massage strength (S408). In this case, since the driving module 13 performs the massage with the set massage pattern and the determined massage strength level and the moving speed of the driving module 13 is increased, the massage may be performed with the adjusted massage strength.

Accordingly, since the massage strength may be continuously variable, the user may easily select the desired massage strength according to the body shape or the health condition.

The above described methods may be implemented by the massager controlling apparatuses 100 and 200 as shown in FIGS. 3 and 8 and, notably, may be implemented by software programs configured to perform the steps, and in this case, the programs may be stored in a recording medium readable by a computer or transmitted by computer data signals mixed with a carrier wave in transmission media or a network.

In this case, the record medium readable by the computer includes all kinds of recording devices in which data readable by a computer system is stored, for example, a ROM, a RAM, a CD-ROM, a DVD-ROM, a DVD-RAM, a magnetic tape, a floppy disk, a hard disk, an optical data storage device, etc.

The scope of the present invention is defined by the appended claims.

## Claims

1. A massager controlling apparatus (100) comprising:
a setting unit (17) configured to set a massage mode including a massage pattern and a standard operation time required to perform the massage pattern of one cycle according to a user's input; and
a control unit (16) configured to control a moving speed of a driving module (13) based on the standard operation time;
wherein the control unit (16) includes a body shape calculation unit (122) configured to scan a body of the user to calculate a body shape information including a weight and a spinal length of the user; and
a time adjusting unit (124) configured to adjust the moving speed of the driving module (13) so that the massage pattern of one cycle is ended at the standard operation time regardless of the body shape information,
increase the standard operation time according to the increase signal of the standard operation time based on the user's input for detailed massage in comparison with the massage pattern according to the standard operation time, decrease the moving speed of the driving module (13) so that perform one cycle of the massage pattern according to the increased standard operating time, and
decrease the standard operation time according to the decrease signal of the standard operation time based on the user's input for quick massage in comparison with the massage pattern according to the standard operation time, increase the moving speed of the driving module (13) so that perform one cycle of the massage pattern according to the decreased standard operating time.

2. The massager controlling apparatus (100) of claim 1, wherein the control unit (16) controls a transferring motor (14) configured to horizontally transfer the driving module (13) to adjust the moving speed of the driving module (13).

3. The massager controlling apparatus (100) of claim 1, wherein the time adjusting unit adjusts the moving speed of the driving module (13) on the basis of the standard operation time and the spinal length of the user.

4. The massager controlling apparatus (100) of claim 1, wherein:
the setting unit (17) includes a strength selection unit (212) configured to select strength of the massage mode and a strength increasing/decreasing selection unit (214) configured to select increasing/decreasing of the selected massage strength to minutely adjust the massage strength; and
the control unit (16) includes a strength control unit configured to control the driving module so that the driving module is driven at the selected massage strength and a strength adjusting unit configured to increase or decrease the moving speed of the driving module according to the increasing/decreasing selection to adjust the massage strength.

5. The massager controlling apparatus (100) of claim 4, wherein the strength increasing/decreasing selection unit (214) selects the corresponding massage strength in an analog manner.

## Patentansprüche

1. Massagegerätesteuerung (100), die Folgendes umfasst:
eine Einstelleinheit (17), konfiguriert zum Einstellen eines Massagemodus mit einem Massagemuster und einer zur Durchführung des Massagemusters von einem Zyklus erforderlichen Standardbetriebszeit gemäß einer Benutzereingabe; und
eine Steuereinheit (16), konfiguriert zum Steuern einer Bewegungsgeschwindigkeit eines Antriebsmoduls (13) auf der Basis der Standardbetriebszeit;
wobei die Steuereinheit (16) eine Körperformberechnungseinheit (122) enthält, die zum Abtasten eines Körpers des Benutzers konfiguriert ist, um Körperforminformationen einschließlich eines Gewichts und einer Wirbelsäulenlänge des Benutzers zu berechnen; und
eine Zeitjustiereinheit (124), konfiguriert zum Justieren der Bewegungsgeschwindigkeit des Antriebsmoduls (13), so dass das Massagemuster von einem Zyklus unabhängig von den Körperforminformationen zur Standardbetriebszeit beendet wird,
Erhöhen der Standardbetriebszeit gemäß dem Erhöhungssignal der Standardbetriebszeit auf der Basis der Benutzereingabe für eine detaillierte Massage im Vergleich zu dem Massagemuster gemäß der Standardbetriebszeit, Verringern der Bewegungsgeschwindigkeit des Antriebsmoduls (13), so dass ein Zyklus des Massagemusters gemäß der erhöhten Standardbetriebszeit durchgeführt wird, und
Verringern der Standardbetriebszeit gemäß dem Verringerungssignal der Standardbetriebszeit auf der Basis der Benutzereingabe für eine Schnellmassage im Vergleich zu dem Massagemuster gemäß der Standardbetriebszeit, Erhöhen der Bewegungsgeschwindigkeit des Antriebsmoduls (13), so dass ein Zyklus des Massagemusters gemäß der verringerten Standardbetriebszeit durchgeführt wird.

2. Massagegerätesteuerung (100) nach Anspruch 1, wobei die Steuereinheit (16) einen Transportmotor (14) steuert, der zum horizontalen Transportieren des Antriebsmoduls (13) konfiguriert ist, um die Bewegungsgeschwindigkeit des Antriebsmoduls (13) zu justieren.

3. Massagegerätesteuerung (100) nach Anspruch 1, wobei die Zeitjustiereinheit die Bewegungsgeschwindigkeit des Antriebsmoduls (13) auf der Basis der Standardbetriebszeit und der Wirbelsäulenlänge des Benutzers justiert.

4. Massagegerätesteuerung (100) nach Anspruch 1, wobei:
die Einstelleinheit (17) eine zum Auswählen der Stärke des Massagemodus konfigurierte Stärkeauswahleinheit (212) und eine zum Auswählen der Erhöhung/Verringerung der ausgewählten Massagestärke konfigurierte Stärkeerhöhungs-/-verringerungsauswahleinheit (214) beinhaltet, um die Massagestärke minutiös zu justieren; und
die Steuereinheit (16) eine Stärkesteuereinheit, die zum Steuern des Antriebsmoduls konfiguriert ist, so dass das Antriebsmodul mit der ausgewählten Massagestärke angetrieben wird, und eine Stärkejustiereinheit beinhaltet, die zum Erhöhen oder Verringern der Bewegungsgeschwindigkeit des Antriebsmoduls gemäß der Erhöhungs-/Verringerungsauswahl konfiguriert ist, um die Massagestärke zu justieren.

5. Massagegerätesteuerung (100) nach Anspruch 4, wobei die Stärkeerhöhungs-/- verringerungsauswahleinheit (214) die entsprechende Massagestärke auf analoge Weise auswählt.

## Revendications

1. Un appareil de commande de dispositif de massage (100) comprenant :
une unité de réglage (17) configurée de façon à régler un mode de massage comprenant un modèle de massage et un temps de fonctionnement standard nécessaire pour exécuter le modèle de massage d'un cycle en fonction d'une entrée d'utilisateur, et
une unité de commande (16) configurée de façon à commander une vitesse de déplacement d'un module d'entraînement (13) en fonction du temps de fonctionnement standard,
où l'unité de commande (16) comprend une unité de calcul de forme corporelle (122) configurée de façon à balayer un corps de l'utilisateur de façon à calculer des informations de forme corporelle comprenant un poids et une longueur de colonne vertébrale de l'utilisateur, et
une unité d'ajustement du temps (124) configurée de façon à ajuster la vitesse de déplacement du module d'entraînement (13) de sorte que le modèle de massage d'un cycle se termine au temps de fonctionnement standard indépendamment des informations de forme corporelle,
augmenter le temps de fonctionnement standard en fonction du signal d'augmentation du temps de fonctionnement standard en fonction de l'entrée d'utilisateur pour un massage détaillé en comparaison du modèle de massage en fonction du temps de fonctionnement standard, diminuer la vitesse de déplacement du module d'entraînement (13) de façon à exécuter un cycle du modèle de massage en fonction du temps de fonctionnement standard augmenté, et
diminuer le temps de fonctionnement standard en fonction du signal de diminution du temps de fonctionnement standard en fonction de l'entrée d'utilisateur pour un massage rapide en comparaison du modèle de massage en fonction du temps de fonctionnement standard, augmenter la vitesse de déplacement du module d'entraînement (13) de façon à exécuter un cycle du modèle de massage en fonction du temps de fonctionnement standard diminué.

2. L'appareil de commande de dispositif de massage (100) selon la Revendication 1, où l'unité de commande (16) commande un moteur de transfert (14) configuré de façon à transférer horizontalement le module d'entraînement (13) de façon à ajuster la vitesse de déplacement du module d'entraînement (13).

3. L'appareil de commande de dispositif de massage (100) selon la Revendication 1, où l'unité d'ajustement du temps ajuste la vitesse de déplacement du module d'entraînement (13) en fonction du temps de fonctionnement standard et de la longueur de colonne vertébrale de l'utilisateur.

4. L'appareil de commande de dispositif de massage (100) selon la Revendication 1, où :
l'unité de réglage (17) comprend une unité de sélection de puissance (212) configurée de façon à sélectionner une puissance du mode de massage et une unité de sélection d'augmentation/diminution de puissance (214) configurée de façon à sélectionner une augmentation/diminution de la puissance de massage sélectionnée de façon à ajuster avec minutie la puissance de massage, et
l'unité de commande (16) comprend une unité de commande de puissance configurée de façon à commander le module d'entraînement de sorte que le module d'entraînement soit entraîné à la puissance de massage sélectionnée et une unité d'ajustement de puissance configurée de façon à augmenter ou diminuer la vitesse de déplacement du module d'entraînement en fonction de la sélection d'augmentation/diminution de façon à ajuster la puissance de massage.

5. L'appareil de commande de dispositif de massage (100) selon la Revendication 4, où l'unité de sélection d'augmentation/diminution de puissance (214) sélectionne la puissance de massage correspondante de manière analogique.
